# EUROPÄISCHE PATENTSCHRIFT

(11) **EP 3 505 415 B1**
(45) Veröffentlichungstag und Bekanntmachung des Hinweises auf die Patenterteilung: **14.07.2021**
(21) Anmeldenummer: 18211537.8
(22) Anmeldetag: 11.12.2018
(51) Int. Cl.: B60W 50/00, B60W 30/00, B60W 30/02, G08C 15/00, H04L 12/40, B60G 17/00, B62D 6/00

(54) **STEUERUNG EINER FAHRWERKKOMPONENTE EINES FAHRZEUGS**
CONTROL OF A RUNNING GEAR COMPONENT OF A VEHICLE
COMMANDE D'UN COMPOSANT DE CHÂSSIS D'UN VÉHICULE

(30) Priorität: 20.12.2017 DE 102017223331
(43) Veröffentlichungstag der Anmeldung: 03.07.2019
(73) Patentinhaber: AUDI AG, 85045 Ingolstadt (DE)
(72) Erfinder: Redeker, Michael, 85084 Reichertshofen (DE)

(56) Entgegenhaltungen:
- DE-A1-102006 047 954
- DE-A1-102013 220 374
- US-A1- 2017 158 199

## Beschreibung

Die Erfindung betrifft ein Verfahren zum Steuern einer Fahrwerkkomponente eines Fahrzeugs, bei dem ein Steuergerät der Fahrwerkkomponente fortlaufend entsprechend einer Erzeugungstaktfrequenz mehrere jeweils einen Steuerwert umfassende Steueranforderungen für einen Aktuator der Fahrwerkkomponente erzeugt, ein Bussystem des Fahrzeugs von dem Steuergerät erzeugte Steueranforderungen fortlaufend entsprechend einer Übertragungstaktfrequenz zu dem Aktuator überträgt und der Aktuator aus dem Steuerwert jeder übertragenen Steueranforderung und einem Ist-Stellwert der Fahrwerkkomponente einen Soll-Stellwert für die Fahrwerkkomponente berechnet und die Fahrwerkkomponente entsprechend dem berechneten Soll-Stellwert verstellt. Ferner betrifft die Erfindung eine Fahrwerkkomponente für ein Fahrzeug.

Fahrzeuge dienen einer Bewegung relativ zu einem befahrbaren Untergrund, zumeist einer Fahrbahn wie etwa einer Straße. Deshalb umfasst jedes Fahrzeug ein sogenanntes Fahrwerk, welches konfiguriert ist, eine Schwerkraft des Fahrzeugs sowie von dem Fahrzeug erzeugte und die Bewegung des Fahrzeugs bewirkende Kräfte und Momente in den Untergrund einzuleiten bzw. die entsprechenden von dem Untergrund ausgehenden Gegenkräfte und Gegenmomente aufzunehmen.

Üblicherweise umfasst jedes Fahrwerk ein Fahrgestell, mehrere an dem Fahrgestell angebrachte und um eine Querachse und teilweise um eine zu der Querachse senkrechte Gierachse des Fahrzeugs rotierbare Räder sowie mehrere den Rädern zugeordnete zumeist elektrisch gesteuerte Sensoren und/oder Aktuatoren. Die Aktuatoren sind ausgebildet, um die Räder mit Kräften und/oder Momenten zu beaufschlagen, wie beispielsweise ein Antriebssystem und ein Bremssystem, oder auf die Räder wirkende Kräfte und/oder Momente aufzunehmen, wie beispielsweise ein Federungssystem.

Damit kommt dem Fahrwerk hinsichtlich einer Fahrsicherheit des Fahrzeugs und eines Fahrkomforts von Insassen des Fahrzeugs eine zentrale Bedeutung zu. Entsprechend wird angestrebt, Fahrwerkkomponenten weiter zu optimieren und besser aufeinander abzustimmen, um die Fahrsicherheit und den Fahrkomfort auch in extremen Fahrsituationen sowie für ungeübte Fahrer des Fahrzeugs zu gewährleisten.

So offenbart die DE 43 05 155 A1 ein Steuersystem für eine Fahrwerkkomponente, nämlich ein Bremssystem eines Fahrzeugs. Das Steuersystem umfasst eine Recheneinheit und mit der Recheneinheit verbundene Aktuatoren, welchen Radbremsen des Fahrzeugs zugeordnet sind. Die Recheneinheit klassifiziert Fahrsituationen des Fahrzeugs und bildet abhängig von der Klasse der Fahrsituation ein Stellsignal für ausgewählte Aktuatoren, um zugeordnete Radbremsen mit einem Bremsdruck beaufschlagen. Mit dem beschriebenen Bremssystem werden ein Bremsweg und eine Spurabweichung bei einem Bremsen verringert und auf diese Weise die Stabilität des Fahrzeugs verbessert.

Ein weiteres Steuersystem für eine Mehrzahl von Fahrwerkkomponenten eines autonomen Fahrzeugs wird gattungsgemäss von US 2017/0158199 A1 offenbart. Das Steuersystem ist konfiguriert, eine maximale Beschleunigungsfähigkeit des autonomen Fahrzeugs zu ermitteln und das Fahrzeug im Rahmen der ermittelten maximalen Beschleunigungsfähigkeit zu beschleunigen.

Bei einem sogenannten aktiven Fahrwerk werden Aktuatoren des Fahrwerks von einem Steuergerät des Fahrzeugs abhängig von einer Fahrsituation auch selbständig gesteuert, um ungünstigen Betriebszuständen des Fahrzeugs entgegenzuwirken oder ein bestimmtes erwünschtes, ggf. auch von dem Fahrer wählbares Fahrverhalten des Fahrzeugs zu gewährleisten.

Entsprechend offenbart die DE 10 2012 202 684 A1 ein Verfahren zum Steuern von Fahrwerkkomponenten eines Fahrzeugs, nämlich Radantrieben und Radbremsen. Bei dem Verfahren werden Räder des Fahrzeugs mit einem Antriebsmoment und/oder mit einem Bremsmoment beaufschlagt, wenn ein von einem Sensor erfasster stabilitätsrelevanter Betriebsparameter des Fahrwerks eine vorbestimmte Aktivierungsschwelle überschreitet. Die Stabilität des Fahrzeugs wird dadurch verbessert, dass die Steuerstrategie variabel angepasst wird, wobei abhängig von einer Fahrsituation die Aktivierungsschwelle abgesenkt und/oder eine Intensität und/oder ein Gradient eines Steuereingriffs erhöht wird.

Allerdings erfolgt bei dem vorstehenden Verfahren ein automatischer Steuereingriff stets erst nach dem Überschreiten der Aktivierungsschwelle. Trotz einer abhängig von der Fahrsituation dynamisch eingestellten Aktivierungsschwelle kann folglich der stabilisierende Steuereingriff unter Umständen verspätet sein. Deshalb wird angestrebt, Fahrwerke aufgrund von Prognosen betreffend bevorstehende Fahrsituationen dynamisch abzustimmen.

Die WO 2005/087521 A1 offenbart ein solches Verfahren und eine entsprechende Vorrichtung zum Anpassen einer Reaktion eines Fahrzeugs an ein von einem Fahrer angestrebtes Fahrmanöver, beispielsweise eine Kurvenfahrt. Das angestrebte Fahrmanöver wird an einem von dem Fahrer eingestellten Sollwert einer Stellgröße einer Fahrwerkkomponente, in dem Beispiel einem Soll-Lenkwinkel, erkannt. Ausgehend von dem Istwert der Stellgröße der Fahrwerkkomponente wird die Reaktion des Fahrzeugs auf den eingestellten Sollwert simuliert und automatisch eine geeignete Wankmomentverteilung des Fahrwerks eingestellt. Mit anderen Worten wird eine Fahrwerkcharakteristik und damit ein Fahrverhalten des Fahrzeugs passend zu einer Prognose vorsorglich verändert.

Moderne Fahrzeuge umfassen zentrale Bussysteme, mit welchen Steuergeräte, Sensoren und Aktuatoren elektrisch leitend verbunden sind. Ein zentrales Bussystem überträgt nach einem bestimmten Übertragungsprotokoll Sensorsignale, welche von den Sensoren fortlaufend erzeugt werden, zu den Steuergeräten und Steueranforderungen, welche von den Steuergeräten erzeugt werden und aus den Sensorsignalen berechnete Steuerwerte umfassen, von den Steuergeräten zu den Aktuatoren. Die Aktuatoren berechnen aus den übermittelten Steuerwerten korrespondierende Soll-Stellwerte und verstellen die zugeordnete Fahrwerkkomponente ausgehend von einem Ist-Stellwert der Fahrwerkkomponente hin zu dem berechneten Soll-Stellwert.

Jedoch können das Bussystem, die Sensoren, die Steuergeräte und die Aktuatoren jeweils unterschiedliche Taktfrequenzen aufweisen. Mit anderen Worten sind in vielen Fällen eine Übertragungstaktfrequenz des Bussystems, Erzeugungstaktfrequenzen der Steuergeräte und Berechnungstaktfrequenzen der Aktuatoren verschieden. Aufgrund der mangelnden Synchronität, aber auch infolge von Latenzzeiten, unterschiedlichen Erzeugungs- und Berechnungsdauern sowie bei einem störungsbedingten Verlust von Steueranforderungen in dem Bussystem kann es zu einem unerwünschten Verstellverlauf von Fahrwerkkomponenten kommen.

Beispielsweise kann ein von einem Steuergerät stetig vorgesehener zeitlicher Verlauf eines Steuerwerts trotz einer gleichmäßigen Erzeugung entsprechender Steueranforderungen bei dem Aktuator zu einem sprunghaften Verstellen von Fahrwerkkomponenten kommen, was der Fahrsicherheit und/oder dem Fahrkomfort abträglich ist. In diesem Zusammenhang ist anzumerken, dass Unstetigkeiten des Verstellverlaufs mit einer kurzen Dauer von 2 ms von dem Fahrer des Fahrzeugs wahrgenommen und als unangenehm oder störend empfunden werden.

Der Erfindung liegt daher die Aufgabe zugrunde, ein Verfahren zum Steuern einer Fahrwerkkomponente eines Fahrzeugs vorzuschlagen, welches auch in den zuvor beschriebenen Fällen einen verbesserten zeitlichen Verstellverlauf der Fahrwerkkomponente sicherstellt. Ferner ist es Aufgabe der Erfindung, eine Fahrwerkkomponente für ein Fahrzeug zu schaffen, welche einen verbesserten zeitlichen Verstellverlauf aufweist.

Ein Gegenstand der Erfindung ist ein Verfahren zum Steuern einer Fahrwerkkomponente eines Fahrzeugs, bei dem ein Steuergerät der Fahrwerkkomponente fortlaufend entsprechend einer Erzeugungstaktfrequenz mehrere jeweils einen Steuerwert umfassende Steueranforderungen für einen Aktuator der Fahrwerkkomponente erzeugt, ein Bussystem des Fahrzeugs von dem Steuergerät erzeugte Steueranforderungen fortlaufend entsprechend einer Übertragungstaktfrequenz zu dem Aktuator überträgt und der Aktuator aus dem Steuerwert jeder übertragenen Steueranforderung und einem Ist-Stellwert der Fahrwerkkomponente einen Soll-Stellwert für die Fahrwerkkomponente berechnet und die Fahrwerkkomponente entsprechend dem berechneten Soll-Stellwert verstellt. Das vorgeschlagene Verfahren kann beispielsweise von einem Lenksystem eines Fahrzeugs zum Verstellen gelenkter Räder um eine Gierachse angewendet werden. Dabei kann das Steuergerät von einem Lenkwinkelsensor oder einem Lenkmomentsensor gebildet sein und der Aktuator einen Motor zum Verstellen der gelenkten Räder umfassen.

In dem erfindungsgemäßen Verfahren berechnet der Aktuator zwischen zwei unmittelbar nacheinander übertragenen Steueranforderungen mindestens einen Zwischenstellwert. Der mindestens eine Zwischenstellwert ermöglicht dem Aktuator ein mehrschrittiges, zumindest zweischrittiges Verstellen der zugeordneten Fahrwerkkomponente von dem Ist-Stellwert der Fahrwerkkomponente zu dem berechneten Soll-Stellwert der Fahrwerkkomponente.

In der Erfindung berechnet der Aktuator zwischen zwei unmittelbar nacheinander übertragenen Steueranforderungen fortlaufend entsprechend einer Berechnungstaktfrequenz mehrere Zwischenstellwerte. Je mehr Zwischenstellwerte von dem Aktuator berechnet werden, um so gleichmäßiger, d. h. glatter lässt sich die dem Aktuator zugeordnete Fahrwerkkomponente verstellen.

In einer sehr vorteilhaften Ausführungsform berechnet der Aktuator in jeder Berechnungszyklusdauer einen Zwischenstellwert. Dadurch wird das größtmögliche Gleichmaß, d. h. die bestmögliche Glattheit des Verstellverlaufs der zugeordneten Fahrwerkkomponente erreicht.

In weiteren Ausführungsformen versieht das Steuergerät jede erzeugte Steueranforderung mit einer bestimmten Schrittzahl und berechnet der Aktuator zwischen zwei unmittelbar nacheinander übertragenen Steueranforderungen höchstens so viele Zwischenstellwerte, wie die Schrittzahl der übertragenen Steueranforderung vorgibt. Mit anderen Worten kann das Steuergerät die Zahl der von dem Aktuator zu berechnenden Zwischenstellwerte bestimmen und dadurch den zeitlichen Verstellverlauf der von dem Aktuator betätigten Fahrwerkkomponente beeinflussen.

In einer bevorzugten Ausführungsform berechnet der Aktuator die Zwischenstellwerte mittels Interpolierens zwischen dem Ist-Stellwert und dem Soll-Stellwert, insbesondere mittels linearen Interpolierens. Die Interpolation stellt ein weithin gebräuchliches und sehr bewährtes Verfahren zum Bestimmen von Zwischenwerten. Entsprechende Interpolationsalgorithmen sind einfach auszuführen und zu implementieren.

In einer Ausführungsform ist die Berechnungstaktfrequenz des Aktuators höher als die Übertragungstaktfrequenz des Bussystems. Dies ist vielfach der Fall und erlaubt also ein glatteres Verstellen der von dem Aktuator betätigten Fahrwerkkomponente, als es allein mittels der von dem Bussystem übertragenen Steueranforderungen ohne weitere Zwischenstellwerte möglich wäre.

In weiteren Ausführungsformen sieht das Steuergerät die Schrittzahl kleiner als den Quotienten aus der Übertragungszyklusdauer und der Berechnungszyklusdauer vor. Der Quotient entspricht der Zahl der maximal möglichen Zwischenstellwerte. Eine Schrittzahl, welche kleiner ist als der Quotient, führt zu einem Erreichen des Soll-Stellwerts vor dem Übertragen der nächsten Steueranforderung. Dieses Verhalten des Aktuators kann als schnelle Interpolation bezeichnet werden.

In alternativen Ausführungsformen sieht das Steuergerät die Schrittzahl gleich dem oder größer als den Quotienten aus der Übertragungszyklusdauer und der Berechnungszyklusdauer vor. Eine Schrittzahl, welche gleich dem Quotienten ist, führt zu einem Erreichen des Soll-Stellwerts, wenn die nächste Steueranforderung übertragen wird, d. h. genau passend zu der Übertragungszyklusdauer. Dieses Interpolationsverhalten des Aktuators kann als lineare Interpolation bezeichnet werden.

Eine Schrittzahl, welche größer ist als der Quotient, verhindert ein Erreichen des Soll-Stellwerts, bis die nächste Steueranforderung übertragen wird, d. h. der Ist-Stellwert der Fahrwerkskomponente hat zu diesem Zeitpunkt den angeforderten Soll-Stellwert noch nicht erreicht. Deshalb lässt sich dieses Verhalten des Aktuators als langsame Interpolation bezeichnen.

In vorteilhaften Ausführungsformen ist die Übertragungszyklusdauer des Bussystems ein ganzzahliges Vielfaches der Berechnungszyklusdauer des Aktuators und sieht insbesondere das Steuergerät die Schrittzahl gleich dem Quotienten aus der Übertragungszyklusdauer und der Berechnungszyklusdauer vor. In dieser Konstellation ergibt sich ein besonders einfaches lineares Verstellverhalten der Fahrwerkkomponente zwischen zwei aufeinanderfolgenden Steueranforderungen.

Gegenstand der Erfindung ist auch eine Fahrwerkkomponente eines Fahrzeugs, mit einem an ein Bussystem des Fahrzeugs anschließbaren Steuergerät, welches konfiguriert ist, fortlaufend entsprechend einer Erzeugungstaktfrequenz mehrere jeweils einen Steuerwert umfassende Steueranforderungen zu erzeugen, und einem an das Bussystem des Fahrzeugs anschließbaren Aktuator, welcher konfiguriert ist, aus dem Steuerwert jeder mittels des Bussystems übertragenen Steueranforderung und einem Ist-Stellwert der Fahrwerkkomponente einen Soll-Stellwert für die Fahrwerkkomponente zu berechnen und die Fahrwerkkomponente entsprechend dem berechneten Soll-Stellwert zu verstellen. Bei der Fahrwerkkomponente kann es sich beispielsweise um ein Lenksystem handeln, welches einen Drehwinkelsensor oder einen Drehmomentsensor als Steuergerät und einen Motor als Aktuator umfasst.

Bei der erfindungsgemäßen Fahrwerkkomponente ist der Aktuator konfiguriert, zwischen zwei unmittelbar nacheinander übertragenen Steueranforderungen mindestens einen Zwischenstellwert zu berechnen, insbesondere in einem erfindungsgemäßen Verfahren. Der auf diese Weise konfigurierte Aktuator ermöglicht ein gleichmäßiges, d. h. glattes Verstellen der Fahrwerkkomponente, wodurch eine große Fahrsicherheit des Fahrzeugs und ein hoher Fahrkomfort für Insassen des Fahrzeugs erreicht wird.

Die Erfindung ist anhand einer Ausführungsform in den Zeichnungen schematisch dargestellt und wird unter Bezugnahme auf die Zeichnungen weiter beschrieben. Es zeigt:
- Figur 1: in einem Diagramm einen Zeitverlauf eines Steuerwerts und eines Soll-Stellwerts in einem Verfahren gemäß dem Stand der Technik;
- Figur 2: in einem Diagramm einen ersten Zeitverlauf eines Soll-Stellwerts in einer Ausführungsform des erfindungsgemäßen Verfahrens;
- Figur 3: in einem Diagramm einen zweiten Zeitverlauf eines Soll-Stellwerts in der Ausführungsform des erfindungsgemäßen Verfahrens;
- Figur 4: in einem Diagramm einen dritten Zeitverlauf eines Soll-Stellwerts in der Ausführungsform des erfindungsgemäßen Verfahrens;
- Figur 5: in einem Diagramm einen vierten Zeitverlauf eines Soll-Stellwerts in der Ausführungsform des erfindungsgemäßen Verfahrens;
- Figur 6: in einem Diagramm einen fünften Zeitverlauf eines Soll-Stellwerts in der Ausführungsform des erfindungsgemäßen Verfahrens; und
- Figur 7: in einem Diagramm einen sechsten Zeitverlauf eines Soll-Stellwerts in der Ausführungsform des erfindungsgemäßen Verfahrens.

Das nachfolgend beschriebene Verfahren wird von einer Fahrwerkkomponente eines Fahrzeugs ausgeführt. Die Fahrwerkkomponente, beispielsweise ein Lenksystem des Fahrzeugs, umfasst ein an ein Bussystem des Fahrzeugs anschließbares Steuergerät. Das Steuergerät ist konfiguriert, fortlaufend entsprechend einer Erzeugungstaktfrequenz mehrere jeweils einen Steuerwert umfassende Steueranforderungen zu erzeugen. Ferner umfasst die Fahrwerkkomponente einen an das Bussystem des Fahrzeugs anschließbaren Aktuator. Der Aktuator ist konfiguriert, aus dem Steuerwert jeder mittels des Bussystems übertragenen Steueranforderung und einem Ist-Stellwert der Fahrwerkkomponente einen Soll-Stellwert für die Fahrwerkkomponente zu berechnen und die Fahrwerkkomponente entsprechend dem berechneten Soll-Stellwert zu verstellen.

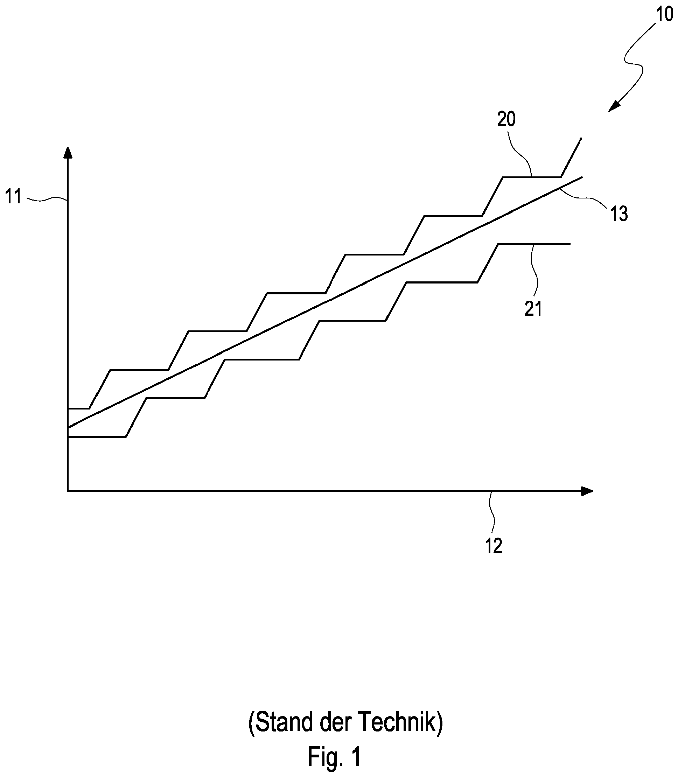

Figur 1 zeigt in einem Diagramm 10 einen Zeitverlauf eines Steuerwerts 20 und eines Soll-Stellwerts 21 in einem Verfahren gemäß dem Stand der Technik. In dem Diagramm 10 sind über der Ordinate 11 in lediglich symbolischen Einheiten von dem Steuergerät über das Bussystem übertragene Steuerwerte 20 bzw. daraus von dem Aktuator berechnete Stellwerte 21 und über der Ordinate 12 ein Zeitverlauf abgetragen. Zur Verdeutlichung ist ein Linearverlauf 13 eingezeichnet.

Im Vergleich mit dem Linearverlauf 13 wird zum einen deutlich, dass der Steuerwert 20 einen - abgesehen von wegen diskreter Übertragungszyklen des Bussystems unvermeidbarer Sprünge - einen linearen Zeitverlauf aufweist. Zum anderen ist erkennbar, dass der von dem Aktuator berechnete Soll-Stellwert 21 einerseits naturgemäß ebenfalls Sprungstellen aufweist und andererseits zudem von dem angeforderten linearen Zeitverlauf des Steuerwerts 20 abweicht. Letzteres ist auf fehlende Synchronität zwischen den Übertragungstaktzyklen des Bussystems und den Berechnungstaktzyklen des Aktuators sowie auf Latenzzeiten und Verluste von Steueranforderungen in dem Bussystem zurückzuführen.

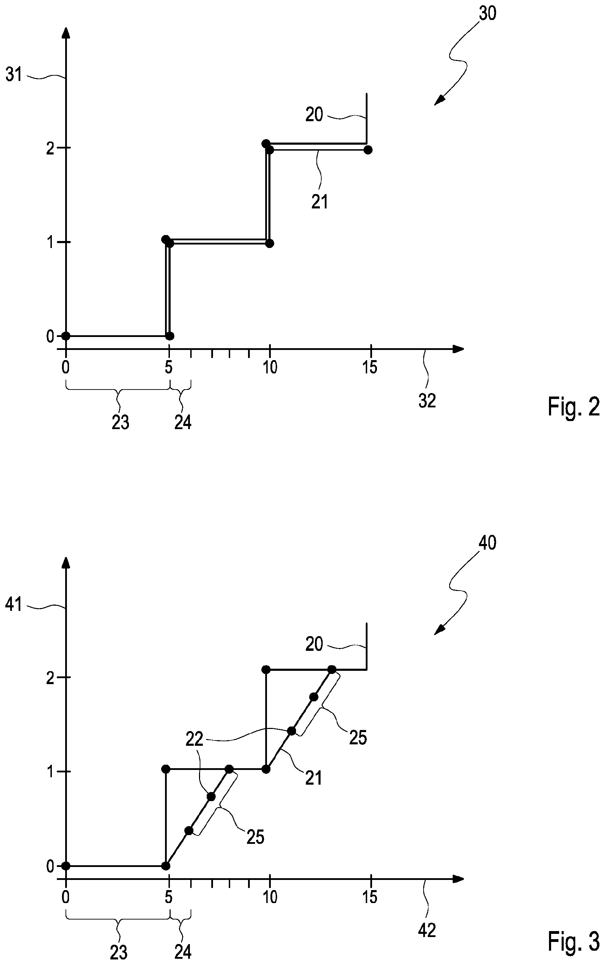

Figur 2 zeigt in einem Diagramm 30 einen ersten Zeitverlauf eines Soll-Stellwerts 21 in einer Ausführungsform des erfindungsgemäßen Verfahrens. In dem Diagramm 30 sind über der Ordinate 31 in lediglich symbolischen Einheiten Steuerwerte 20 bzw. Stellwerte 21 und über der Ordinate 32 in Millisekunden (ms) ein Zeitverlauf abgetragen. Wie dem Diagramm 30 entnommen werden kann, weist ein Übertragungszyklus 23 des Bussystems eine Dauer von 5 ms auf. Die Dauer eines Berechnungszyklus 24 des Aktuators beträgt dagegen 1 ms.

Damit ist die Übertragungszyklusdauer 23 des Bussystems ein ganzzahliges Vielfaches der Berechnungszyklusdauer 24 des Aktuators, und ein Quotient aus der Übertragungszyklusdauer 23 und der Berechnungszyklusdauer 24 beträgt 5. Die von dem Steuergerät erzeugten und über das Bussystem übertragenen Steueranforderungen umfassen eine Schrittzahl mit dem Wert 0. Entsprechend berechnet der Aktuator bei diesem Zeitverlauf des Soll-Stellwerts 21 keine Zwischenwerte, und der Soll-Stellwert 21 folgt sprunghaft den Steuerwerten 20.

Der in dem Diagramm 30 gezeigte Zeitverlauf des Sollstellwerts 21 stellt also einen Grenzfall des erfindungsgemäßen Verfahrens dar, mit welchem für den Soll-Stellwert 21 ein Zeitverlauf wie aus dem Stand der Technik bewirkt werden kann. Aus Sicht des erfindungsgemäßen Verfahrens kann dieser Grenzfall als sprunghafte "Interpolation" bezeichnet werden.

Figur 3 zeigt in einem Diagramm 40 einen zweiten Zeitverlauf eines Soll-Stellwerts 21 in der Ausführungsform des erfindungsgemäßen Verfahrens. In dem Diagramm 40 sind über der Ordinate 41 in lediglich symbolischen Einheiten Steuerwerte 20 bzw. Stellwerte 21 und über der Ordinate 42 in Millisekunden ein Zeitverlauf abgetragen. Wie dem Diagramm 40 entnommen werden kann, weist ein Übertragungszyklus 23 des Bussystems eine Dauer von 5 ms auf. Die Dauer eines Berechnungszyklus 24 des Aktuators beträgt dagegen 1 ms.

Damit ist die Übertragungszyklusdauer 23 des Bussystems ein ganzzahliges Vielfaches der Berechnungszyklusdauer 24 des Aktuators, und ein Quotient aus der Übertragungszyklusdauer 23 und der Berechnungszyklusdauer 24 beträgt 5. Die von dem Steuergerät erzeugten und über das Bussystem übertragenen Steueranforderungen umfassen eine Schrittzahl 25 mit dem Wert 3. Damit sieht das Steuergerät eine Schrittzahl 25 vor, die kleiner ist als der Quotient aus der Übertragungszyklusdauer 23 und der Berechnungszyklusdauer 23.

Entsprechend berechnet der Aktuator in drei Berechnungszyklusdauern 24 jeweils einen Zwischenwert 22, wobei der dem Steuerwert 20 entsprechende Soll-Stellwert nach drei Berechnungszyklusdauern 24 und folglich vor dem Übertragen der jeweils nächsten Steueranforderung erreicht ist. Dieses Verhalten des Aktuators kann als schnelle Interpolation bezeichnet werden und vermeidet den sprunghaften in Figur 2 dargestellten Zeitverlauf.

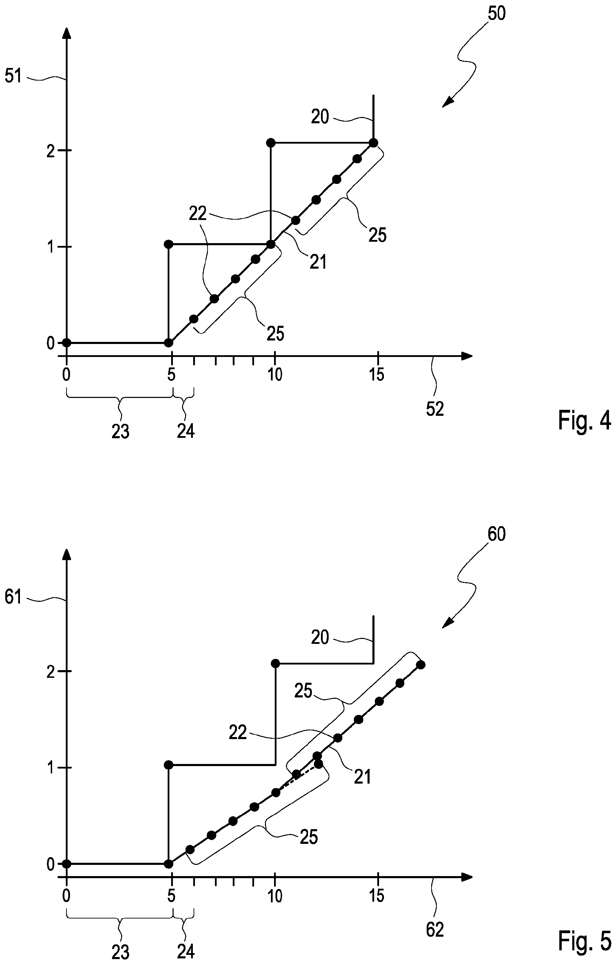

Figur 4 zeigt in einem Diagramm 50 einen dritten Zeitverlauf eines Soll-Stellwerts 21 in der Ausführungsform des erfindungsgemäßen Verfahrens. In dem Diagramm 50 sind über der Ordinate 51 in lediglich symbolischen Einheiten Steuerwerte 20 bzw. Stellwerte 21 und über der Ordinate 52 in Millisekunden ein Zeitverlauf abgetragen. Wie dem Diagramm 50 entnommen werden kann, weist ein Übertragungszyklus 23 des Bussystems eine Dauer von 5 ms auf. Die Dauer eines Berechnungszyklus 24 des Aktuators beträgt dagegen 1 ms.

Damit ist die Übertragungszyklusdauer 23 des Bussystems ein ganzzahliges Vielfaches der Berechnungszyklusdauer 24 des Aktuators, und ein Quotient aus der Übertragungszyklusdauer 23 und der Berechnungszyklusdauer 24 beträgt 5. Die von dem Steuergerät erzeugten und über das Bussystem übertragenen Steueranforderungen umfassen eine Schrittzahl 25 mit dem Wert 5. Damit sieht das Steuergerät eine Schrittzahl 25 gleich dem Quotienten aus der Übertragungszyklusdauer 23 und der Berechnungszyklusdauer 23 vor.

Entsprechend berechnet der Aktuator in fünf Berechnungszyklusdauern jeweils einen Zwischenwert 22, wobei der dem Steuerwert 20 entsprechende Soll-Stellwert nach fünf Berechnungszyklusdauern 24 und bei dem Übertragen der jeweils nächsten Steueranforderung erreicht ist. Dieses Verhalten des Aktuators kann als lineare Interpolation bezeichnet werden und approximiert optimal den ursprünglich linearen Zeitverlauf des Steuerwerts 20.

Figur 5 zeigt in einem Diagramm 60 einen vierten Zeitverlauf eines Soll-Stellwerts 21 in der Ausführungsform des erfindungsgemäßen Verfahrens. In dem Diagramm 60 sind über der Ordinate 61 in lediglich symbolischen Einheiten Steuerwerte 20 bzw. Stellwerte 21 und über der Ordinate 62 in Millisekunden ein Zeitverlauf abgetragen. Wie dem Diagramm 60 entnommen werden kann, weist ein Übertragungszyklus 23 des Bussystems eine Dauer von 5 ms auf. Die Dauer eines Berechnungszyklus 24 des Aktuators beträgt dagegen 1 ms.

Damit ist die Übertragungszyklusdauer 23 des Bussystems ein ganzzahliges Vielfaches der Berechnungszyklusdauer 24 des Aktuators, und ein Quotient aus der Übertragungszyklusdauer 23 und der Berechnungszyklusdauer 24 beträgt 5. Die von dem Steuergerät erzeugten und über das Bussystem übertragenen Steueranforderungen umfassen eine Schrittzahl 25 mit dem Wert 7. Damit sieht das Steuergerät eine Schrittzahl 25 vor, die größer ist als der Quotient aus der Übertragungszyklusdauer 23 und der Berechnungszyklusdauer 23.

Entsprechend berechnet der Aktuator ausgehend von sieben Berechnungszyklusdauern 24 jeweils einen Zwischenwert 22, wobei der dem Steuerwert 20 entsprechende Soll-Stellwert auch erst nach Berechnungszyklusdauern 24 und also nach dem Übertragen der jeweils nächsten Steueranforderung erreicht wäre. Infolgedessen wird der nach fünf Berechnungszyklusdauern 24 erreichte und von dem anvisierten Soll-Stellwert abweichende Stellwert als Ist-Stellwert für eine auf die nächste Steueranforderung folgende Berechnung des Aktuators genommen. Dieses Verhalten des Aktuators kann als langsame Interpolation bezeichnet werden.

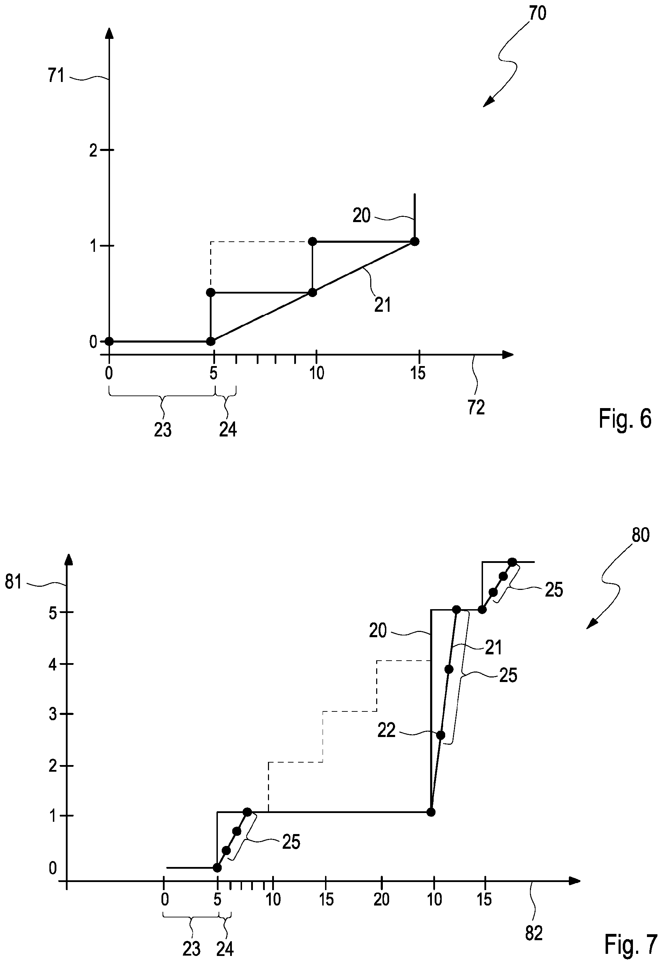

Figur 6 zeigt in einem Diagramm 70 einen fünften Zeitverlauf eines Soll-Stellwerts 21 in der Ausführungsform des erfindungsgemäßen Verfahrens. In dem Diagramm 70 sind über der Ordinate 71 in lediglich symbolischen Einheiten Steuerwerte 20 bzw. Stellwerte 21 und über der Ordinate 72 in Millisekunden (ms) ein Zeitverlauf abgetragen. Wie dem Diagramm 70 entnommen werden kann, weist ein Übertragungszyklus 23 des Bussystems eine Dauer von 5 ms auf. Die Dauer eines Berechnungszyklus 24 des Aktuators beträgt dagegen 1 ms.

Damit ist die Übertragungszyklusdauer 23 des Bussystems ein ganzzahliges Vielfaches der Berechnungszyklusdauer 24 des Aktuators, und ein Quotient aus der Übertragungszyklusdauer 23 und der Berechnungszyklusdauer 24 beträgt 5. Der dargestellte Zeitverlauf unterscheidet sich von dem in Figur 4 gezeigten Zeitverlauf dadurch, dass die Änderungsrate des Steuerwerts 20 halbiert ist.

Figur 7 zeigt in einem Diagramm 80 einen sechsten Zeitverlauf eines Soll-Stellwerts 21 in der Ausführungsform des erfindungsgemäßen Verfahrens. In dem Diagramm 80 sind über der Ordinate 81 in lediglich symbolischen Einheiten Steuerwerte 20 bzw. Stellwerte 21 und über der Ordinate 82 in Millisekunden (ms) ein Zeitverlauf abgetragen. Wie dem Diagramm 80 entnommen werden kann, weist ein Übertragungszyklus 23 des Bussystems eine Dauer von 5 ms auf. Die Dauer eines Berechnungszyklus 24 des Aktuators beträgt dagegen 1 ms.

Damit ist die Übertragungszyklusdauer 23 des Bussystems ein ganzzahliges Vielfaches der Berechnungszyklusdauer 24 des Aktuators, und ein Quotient aus der Übertragungszyklusdauer 23 und der Berechnungszyklusdauer 24 beträgt 5. Die von dem Steuergerät erzeugten und über das Bussystem übertragenen Steueranforderungen umfassen eine Schrittzahl 25 mit dem Wert 3. Damit liegt wie in dem in dem Diagramm 30 gezeigt eine schnelle Interpolation vor.

Abweichend von dem in Figur 3 gezeigten Zeitverlauf bleiben hier allerdings beispielsweise infolge von Störungen des Bussystems zwischen den Zeitpunkten 10 ms und 25 ms drei Steueranforderungen aus, bevor ab dem Zeitpunkt 25 ms wieder bestimmungsgemäß Steueranforderungen mit Steuerwerten 20 übertragen werden. Durch die schnelle Interpolation wird der große Sprung zum Zeitpunkt 25 entsprechend abgemildert.

Ein wesentlicher Vorteil des erfindungsgemäßen Verfahrens besteht darin, dass das Steuergerät durch Variieren der Steueranforderungen hinsichtlich der Schrittzahl 25 das Interpolationsverhalten des Aktuators bestimmen kann, um aktuelle Fahrsituationen des Fahrzeugs angemessen zu berücksichtigen. Auf diese Weise wird der Aktuator veranlasst, etwaige Unstetigkeiten der von den Steueranforderungen umfassten Steuerwerte 20 durch Berechnen von Zwischenstellwerten 22 flexibel zu interpolieren, wodurch ein entsprechend weiches Verstellen der von dem Aktuator betätigten Fahrwerkkomponente erreicht wird. Dies geht mit einer Verbesserung der Fahrzeugsicherheit und einer Erhöhung des Fahrkomforts einher.

### BEZUGSZEICHENLISTE:

- 10: Diagramm
- 11: Ordinate
- 12: Abszisse
- 13: Linearfunktion
- 20: Steuerwert (im Zeitverlauf)
- 21: Soll-Stellwert (im Zeitverlauf)
- 22: Zwischenstellwert
- 23: Übertragungszyklusdauer
- 24: Berechnungszyklusdauer
- 25: Schrittzahl
- 30: Diagramm
- 31: Ordinate
- 32: Abszisse
- 40: Diagramm
- 41: Ordinate
- 42: Abszisse
- 50: Diagramm
- 51: Ordinate
- 52: Abszisse
- 60: Diagramm
- 61: Ordinate
- 62: Abszisse
- 70: Diagramm
- 71: Ordinate
- 72: Abszisse
- 80: Diagramm
- 81: Ordinate
- 82: Abszisse

## Patentansprüche

1. Verfahren zum Steuern einer Fahrwerkkomponente eines Fahrzeugs, bei dem
- ein Steuergerät der Fahrwerkkomponente fortlaufend entsprechend einer Erzeugungstaktfrequenz mehrere jeweils einen Steuerwert (20) umfassende Steueranforderungen für einen rechenfähigen Aktuator der Fahrwerkkomponente erzeugt;
- ein Bussystem des Fahrzeugs von dem Steuergerät erzeugte Steueranforderungen fortlaufend entsprechend einer Übertragungstaktfrequenz zu dem Aktuator überträgt;
- der Aktuator aus dem Steuerwert (20) jeder übertragenen Steueranforderung und einem Ist-Stellwert der Fahrwerkkomponente einen Soll-Stellwert (21) für die Fahrwerkkomponente berechnet und die Fahrwerkkomponente entsprechend dem berechneten Soll-Stellwert (21) verstellt, und bei dem
- der Aktuator zwischen zwei unmittelbar nacheinander übertragenen Steueranforderungen mindestens einen Zwischenstellwert (22) berechnet.

2. Verfahren nach Anspruch 1, bei dem der Aktuator zwischen zwei unmittelbar nacheinander übertragenen Steueranforderungen fortlaufend entsprechend einer Berechnungstaktfrequenz mehrere Zwischenstellwerte (22) berechnet.

3. Verfahren nach einem der Ansprüche 1 oder 2, bei dem der Aktuator in jeder Berechnungszyklusdauer (24) einen Zwischenstellwert (22) berechnet.

4. Verfahren nach einem der Ansprüche 1 bis 3, bei dem das Steuergerät jede erzeugte Steueranforderung mit einer bestimmten Schrittzahl (25) versieht und der Aktuator zwischen zwei unmittelbar nacheinander übertragenen Steueranforderungen höchstens so viele Zwischenstellwerte (22) berechnet, wie die Schrittzahl (25) der übertragenen Steueranforderung vorgibt.

5. Verfahren nach einem der Ansprüche 2 bis 4, bei dem der Aktuator die Zwischenstellwerte (22) mittels Interpolierens zwischen dem Ist-Stellwert und dem Soll-Stellwert (21) berechnet, insbesondere mittels linearen Interpolierens.

6. Verfahren nach einem der Ansprüche 1 bis 5, bei dem die Berechnungstaktfrequenz des Aktuators höher ist als die Übertragungstaktfrequenz des Bussystems.

7. Verfahren nach Anspruch 6, bei dem das Steuergerät die Schrittzahl (25) kleiner als den Quotienten aus der Übertragungszyklusdauer (23) und der Berechnungszyklusdauer (23) vorsieht.

8. Verfahren nach Anspruch 6, bei dem das Steuergerät die Schrittzahl (25) gleich dem oder größer als den Quotienten aus der Übertragungszyklusdauer (23) und der Berechnungszyklusdauer (23) vorsieht.

9. Verfahren nach einem der Anspruch 6 bis 8, bei dem die Übertragungszyklusdauer (23) des Bussystems ein ganzzahliges Vielfaches der Berechnungszyklusdauer (23) des Aktuators ist und insbesondere das Steuergerät die Schrittzahl (25) gleich dem Quotienten aus der Übertragungszyklusdauer (23) und der Berechnungszyklusdauer (23) vorsieht.

10. Fahrwerkkomponente eines Fahrzeugs, mit einem an ein Bussystem des Fahrzeugs anschließbaren Steuergerät, welches konfiguriert ist, fortlaufend entsprechend einer Erzeugungstaktfrequenz mehrere jeweils einen Steuerwert (20) umfassende Steueranforderungen zu erzeugen, und einem an das Bussystem des Fahrzeugs anschließbaren rechenfähigen Aktuator, welcher konfiguriert ist, aus dem Steuerwert (20) jeder mittels des Bussystems übertragenen Steueranforderung und einem Ist-Stellwert der Fahrwerkkomponente einen Soll-Stellwert (21) für die Fahrwerkkomponente zu berechnen und die Fahrwerkkomponente entsprechend dem berechneten Soll-Stellwert (21) zu verstellen, bei der der Aktuator konfiguriert ist, zwischen zwei unmittelbar nacheinander übertragenen Steueranforderungen mindestens einen Zwischenstellwert (22) zu berechnen, insbesondere in einem Verfahren nach einem der Ansprüche 1 bis 9.

## Claims

1. Method for controlling a running gear component of a vehicle, in which
- a control unit of the running gear component continuously generates, in accordance with a generation clock frequency, a plurality of control requests, each comprising a control value (20), for a computational actuator of the running gear component;
- a bus system of the vehicle continuously transmits, in accordance with a transmission clock frequency, control requests generated by the control unit to the actuator;
- the actuator calculates a desired setting (21) for the running gear component from the control value (20) of each transmitted control request and an actual setting of the running gear component, and adjusts the running gear component in accordance with the calculated desired setting (21), and in which
- the actuator calculates at least one intermediate setting (22) between two control requests transmitted directly one after the other.

2. Method according to claim 1, in which the actuator continuously calculates, in accordance with a calculation clock frequency, a plurality of intermediate settings (22) between two control requests transmitted directly one after the other.

3. Method according to any one of claims 1 or 2, in which the actuator calculates an intermediate setting (22) in each calculation cycle period (24).

4. Method according to any one of claims 1 to 3, in which the control unit provides each generated control request with a specific number of steps (25) and the actuator calculates, between two control requests transmitted directly one after the other, at most as many intermediate settings (22) as the number of steps (25) of the transmitted control request specifies.

5. Method according to any one of claims 2 to 4, in which the actuator calculates the intermediate settings (22) by means of interpolation between the actual setting and the desired setting (21), in particular by means of linear interpolation.

6. Method according to any one of claims 1 to 5, in which the calculation clock frequency of the actuator is higher than the transmission clock frequency of the bus system.

7. Method according to claim 6, in which the control unit provides the number of steps (25) smaller than the quotient of the transmission cycle period (23) and the calculation cycle period (23).

8. The method according to claim 6, in which the control unit provides the number of steps (25) equal to or greater than the quotient of the transmission cycle period (23) and the calculation cycle period (23).

9. Method according to any one of claims 6 to 8, in which the transmission cycle period (23) of the bus system is a whole-number multiple of the calculation cycle period (23) of the actuator and, in particular, the control unit provides the number of steps (25) equal to the quotient of the transmission cycle period (23) and the calculation cycle period (23).

10. Running gear component of a vehicle, with a control unit that can be connected to a bus system of the vehicle and is configured to continuously generate, in accordance with a generation clock frequency, a plurality of control requests, each comprising a control value (20), and a computational actuator which can be connected to the bus system of the vehicle and is configured to generate a desired setting (21) for the running gear component from the control value (20) of each control request transmitted by means of the bus system and an actual setting of the running gear component, and to adjust the running gear component in accordance with the calculated desired setting (21), in which the actuator is configured to calculate at least one intermediate setting (22) between two control requests transmitted directly one after the other, in particular in a method according to any one of Claims 1 to 9.

## Revendications

1. Procédé de commande d'un composant de châssis d'un véhicule, dans lequel
- un dispositif de commande du composant de châssis génère en continu plusieurs demandes de commande, chacune comprenant une valeur de commande (20), pour un actionneur capable de calculer du composant de châssis conformément à une fréquence d'horloge de génération ;
- un système de bus du véhicule transmet en continu des demandes de commande générées par le dispositif de commande à l'actionneur conformément à une fréquence d'horloge de transmission ;
- l'actionneur calcule une valeur de consigne souhaitée (21) pour le composant de châssis à partir de la valeur de commande (20) de chaque demande de commande transmise et d'une valeur de consigne réelle du composant de châssis, et règle le composant de châssis conformément à la valeur de consigne souhaitée (21) calculée, et dans lequel
- l'actionneur calcule au moins une valeur de consigne intermédiaire (22) entre deux demandes de commande transmises immédiatement l'une après l'autre.

2. Procédé selon la revendication 1, dans lequel l'actionneur calcule en continu plusieurs valeurs de consigne intermédiaires (22) conformément à une fréquence d'horloge de calcul entre deux demandes de commande transmises immédiatement l'une après l'autre.

3. Procédé selon l'une quelconque des revendications 1 ou 2, dans lequel l'actionneur calcule une valeur de consigne intermédiaire (22) dans chaque durée de cycle de calcul (24).

4. Procédé selon l'une quelconque des revendications 1 à 3, dans lequel le dispositif de commande attribue à chaque demande de commande générée un nombre d'étapes (25) déterminé et l'actionneur calcule, entre deux demandes de commande transmises immédiatement l'une après l'autre, au plus autant de valeurs de consigne intermédiaires (22) que le nombre d'étapes (25) de la demande de commande transmise le spécifie.

5. Procédé selon l'une quelconque des revendications 2 à 4, dans lequel l'actionneur calcule les valeurs de consigne intermédiaires (22) au moyen d'une interpolation entre la valeur de consigne réelle et la valeur de consigne souhaitée (21), en particulier au moyen d'une interpolation linéaire.

6. Procédé de l'une quelconque des revendications 1 à 5, dans lequel la fréquence d'horloge de calcul de l'actionneur est supérieure à la fréquence d'horloge de transmission du système de bus.

7. Procédé selon la revendication 6, dans lequel le dispositif de commande prévoit le nombre d'étapes (25) pour qu'il soit inférieur au quotient de la durée de cycle de transmission (23) et de la durée de cycle de calcul (23).

8. Procédé selon la revendication 6, dans lequel le dispositif de commande prévoit le nombre d'étapes (25) pour qu'il soit égal ou supérieur au quotient de la durée de cycle de transmission (23) et de la durée de cycle de calcul (23).

9. Procédé selon l'une quelconque des revendications 6 à 8, dans lequel la durée de cycle de transmission (23) du système de bus est un multiple entier de la durée de cycle de calcul (23) de l'actionneur et, en particulier, le dispositif de commande prévoit le nombre d'étapes (25) pour qu'il soit égal au quotient de la durée de cycle de transmission (23) et de la durée de cycle de calcul (23).

10. Composant de châssis d'un véhicule, comprenant un dispositif de commande pouvant être relié à un système de bus du véhicule, lequel dispositif de commande est configuré pour générer en continu, conformément à une fréquence d'horloge de génération, plusieurs demandes de commande comprenant chacune une valeur de commande (20), et à un actionneur capable de calculer pouvant être relié au système de bus du véhicule, lequel actionneur est configuré pour calculer une valeur de consigne souhaitée (21) pour le composant de châssis à partir de la valeur de commande (20) de chaque demande de commande transmise au moyen du système de bus et d'une valeur de consigne réelle du composant de châssis, et pour régler le composant de châssis conformément à la valeur de consigne souhaitée (21) calculée, dans lequel l'actionneur est configuré pour calculer au moins une valeur de consigne intermédiaire (22) entre deux demandes de commande transmises immédiatement l'une après l'autre, en particulier dans un procédé selon l'une quelconque des revendications 1 à 9.
